# EUROPEAN PATENT SPECIFICATION

(11) **EP 1 240 111 B1**
(45) Date of publication and mention of the grant of the patent: **09.08.2006**
(21) Application number: 00969599.0
(22) Date of filing: 17.10.2000
(51) Int. Cl.: C03B 19/14, C03B 7/18

(54) **METHOD AND APPARATUS FOR DYEING A MATERIAL**
VERFAHREN UND VORRICHTUNG ZUM FÄRBEN EINES MATERIALS
PROCEDE ET APPAREIL PERMETTANT DE COLORER UN MATERIAU

(30) Priority: 19.10.1999 FI 992255
(43) Date of publication of application: 18.09.2002
(73) Proprietor: Liekki Oy, 00940 Helsinki (FI)
(72) Inventor: TIKKANEN, Juha, FIN-33700 Tampere (FI); KESKINEN, Jorma, FIN-33270 Tampere (FI); EEROLA, Markus, FIN-05470 Hyvinkää (FI); RAJALA, Markku, FIN-00960 Helsinki (FI)
(74) Representative: Hakola, Unto Tapani
(86) International application number: PCT/FI2000/000898
(87) International publication number: WO 2001/028941

(56) References cited:
- EP-A1- 0 463 783
- WO-A1-99/15468
- WO-A2-96/12205
- US-A- 3 905 791

## Description

The invention relates to a method and an apparatus for performing colloidal dyeing of a material.

A material can be dyed in a number of different ways, each having their own advantages and disadvantages. Most typically, the dyeing of a material means that a coat of paint with a desired colour is applied onto a surface to be dyed, or that dyeing constituents are included in the raw materials at the stage of manufacturing of the material. To dye translucent materials, such as glasses, maintaining the translucency of the material, the conventional application of a separate coat of paint onto the surface of the material does not often produce the desired effect even in a case where the separate coat of paint would be translucent, for example due to its thinness. When a colouring substance is added in the material at the stage of its manufacturing; considerable quantities of the colouring substance are consumed and subjected to chemical reactions.

To colour translucent materials, such as glass, it is known to use so-called colloidal dyeing, in which a colouring component is added in the material to be coloured at the manufacturing stage, typically when the material to be dyed is still at least partly in fluid state. By accurate control of cooling down of the melt, it is possible to provide such chemical and thermotechnical conditions that, as a result of the material being cooled, the colouring component is phase-separated and crystallized as ultra-small colloidal particles within the material to be dyed. At this stage, the particle typically does not have any colouring properties yet, but the particle size must be increased to achieve colouring properties. The size of the crystallized ultra-small particle is controlled either by postheating or by blending the material chemically at the melting stage in such a way that the colloidal particle will grow to the colour-producing size already at the cooling stage. It is difficult to control the particle size by chemical blending, which normally leads to an uncontrolled growth in the particle size and has the result that the particles absorb and scatter light at a variety of wavelengths.

Colloidal dyeing is particularly interesting, because colloidal dyeing can be used to colour a translucent material red. This is a significant advantage to e.g. ion dyeing which is another technique commonly used for dyeing of translucent materials. Ion dyeing, which as such is a simpler technique than conventional colloidal dyeing, has the significant disadvantage that particularly the red colour is lacking from the variety of available colours.

The colour-producing properties of colloidal particles are known as such. This is discussed for example in Doremus, R. (1994), Glass Science, Chapter 17, p. 314-315. In view of colloidal dyeing, such colloidal suspensions of strongly absorbent materials are essential, in which the optical absorption dominates over the scattering of light. This condition is met by metals and some other materials, if the scattering of light is minimized by restricting the particle size to less than 50 nm. Known materials used in colloidal dyeing of glass include copper (produced colour ruby), silver (yellow) and gold (ruby). Colouring colloidal particles also include for example selenium compounds (pink) in glass, but in this case the absorption is not dependent on the particle size but on the chemical composition of the particle.

A prior art method for colloidal colouring of glass is based on the basic idea that the colouring metal component added in the mass of molten glass is reduced in the glass as a metal whose solubility in the glass is decreased when the temperature is decreased, and at a certain temperature, it is phase-separated and crystallized into small particles, whereby a suspension of glass and metal particles is formed. If the size of the formed particles can be made correct, typically sufficiently small, the above-mentioned situation is achieved, in which the absorption properties of the particles dominate over the scattering effect of the particles. Thus the particles give the whole suspension their own representative colour.

A problem in colloidal dyeing according to prior art is that the process is complicated and therefore difficult to control. Factors effective in the formation of the particles include for example the balance of oxidation and reduction (so-called redox equilibrium) and the thermal history of the substance to be coloured. In addition, the material to be dyed must be submitted to thermal treatment after the phase separation, to increase the particle size to colour producing size after the dyeing. Furthermore, the chemistry of the molten material to be coloured must be carefully controlled so that the formed colloidal particles would have the correct composition and that as great a part of the dissolved colouring material as possible would be reduced to a crystallizing form. For example when silver or copper is used,' favourable chemical conditions must be provided for the formation of metallic silver or copper par ticles by reduction, and care must be taken to avoid that the substance remains in oxide form in the glass and is reoxidized. Attempts have been made to control the process of particle formation for example by means of various additives added in the melt, but it is a problem that e.g. the theory of formation of colloidal particles in glass is not precisely known, wherein it has been difficult to predict the effects of the additives.

It is an aim of the present invention to eliminate the above-presented problems in colloidal dyeing according to prior art, by using a flame spraying method for introducing colloidal particles into the material to be dyed.

The method according to the invention is presented in independent claim 1.

The apparatus according to the invention is presented in independent claim 10.

An advantage of the invention when compared with colloidal dyeing of prior art is that the dyeing process is significantly simplified, as the thermal processing stage of prior art, requiring precise control, and the possible control of the chemical composition are eliminated. Furthermore, the solution according to the invention makes colloidal dyeing of materials possible also for ready processed materials. In solutions of prior art, the components producing colloidal dyeing are typically blended in the material to be coloured before the processing of the material. For example, to make a glass object coloured by colloidal dyeing in the solution of prior art, the colouring components are added in the mass of molten glass before the glass mass is formed into an object. According to the method of the invention, colloidal dyeing can be applied to an object already formed, for example by spraying particles producing colloidal dyeing onto the surface layer of the glass object, or by spraying a new coat of an aerosol which contains colloidal particles onto the surface of the object.

In the following, the present invention will be described in more detail with reference to the appended figures, in which
- Fig. 1: is a flow chart showing the method for producing colloidal dyeing of a material according to the invention,
- Fig. 2: illustrates schematically an apparatus for producing colloidal dyeing of a material according to the invention.

In the following, the use of the method and the apparatus of the invention in the colouring of glass are presented as an example; however, the basic idea of the invention is not restricted solely to the dyeing of glass but it can also be applied in the dyeing of other materials which are preferably transparent or translucent. Moreover, the basic idea is not limited solely to the dyeing of amorphous materials, but it can also be applied in the dyeing of liquids and solid substances.

In colloidal dyeing of a material according to the invention, the particles producing colloidal dyeing are produced separately from the piece to be dyed and are added into the piece to be dyed in one work stage by spraying. The dyeing can thus be advantageously performed on a piece that is already formed or preformed. As a result, it is possible to separate the work stages related to the manufacturing and dyeing of the piece clearly from each other, which makes the process to be controlled considerably simpler when compared with colloidal dyeing of prior art.

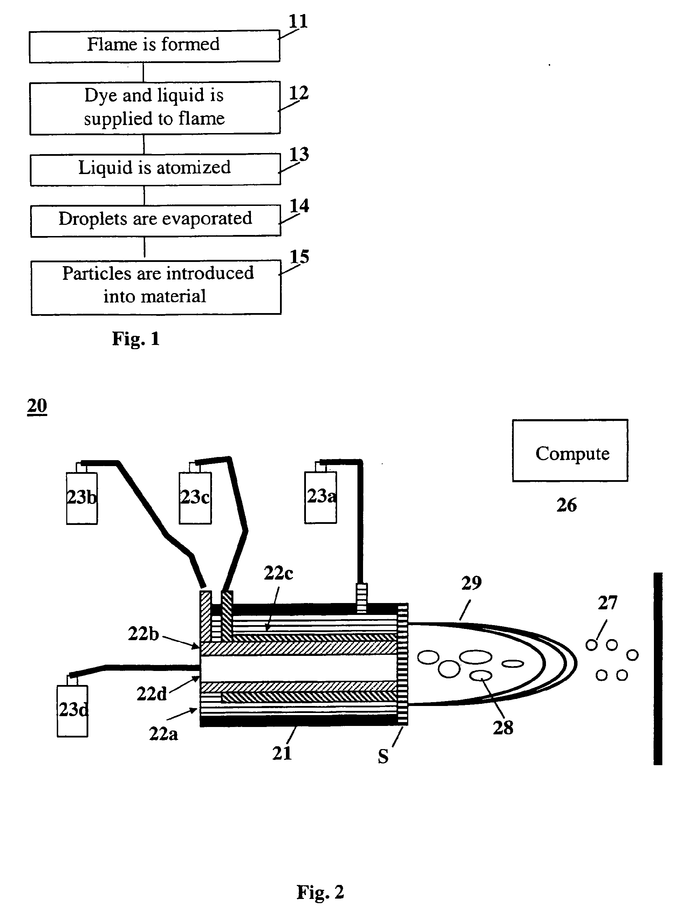

As shown in the flow chart of Fig. 1, the dyeing method according to the invention comprises a step 11 in which a flame is formed. In the present application, the term 'flame' is not restricted to refer solely to a conventional flame produced by burning of reactants. In addition to this, the flame can be any method, obvious for a man skilled in the art, to produce a high local temperature. Such alternatives include for example a plasma flame or an electric arc flame.

In the next step 12, a first component is supplied to the flame or to its direct vicinity. The first component to be supplied to the flame is preferably either a material which directly contains colloidal particles, or another material which, as a result of a chemical or other reaction, produces colloidal particles with the correct size in the material. The first component to be supplied to the flame can be either directly in liquid state or it can be preferably supplied to the flame in a form readily mixed or dissolved in a second liquid component. Examples include a gold colloid, silver colloid or copper colloid solution.

Furthermore, it is possible to introduce also other components to the flame, such as a coating material which coats the particles producing the colloidal colour, or a glass forming liquid or a gaseous material, which facilitate the formation of colloid particles with the correct size in the material. For example, when glass is dyed with gold, the first component to be supplied to the flame can be an ion solution of gold, such as gold chloride HAuCl₄ which forms gold particles in the flame, and the second component can be of an alkali metal compound, such as lithium nitrate LiNO₃ which decreases the size of gold particles formed in the flame. The substances can be supplied either separately or together if they do not react adversely with each other.

It is also possible to supply the process with other components, not related to the colloidal dyeing process, such as another component producing dyeing.

In the next step 13 of the method, the liquid component is atomized in such a way that the formed drops contain said first component or a third component formed as a result of a reaction in which said first component has been a reactant, or a combination of these. Said drops are preferably made to contain said first component, if said first component has been mixed or dissolved in the liquid to be atomized already when supplied to the flame.

The atomization can be preferably performed for example by means of a gas supplied to the flame, preferably in the vicinity of the flame. Moreover, the atomization is preferably carried out in the same device as the flame formation.

In the next step 14 of the method, the drops are evaporated, wherein unevaporating components in the drops form ultra-small metallic particles. The particles may be developed either directly through nucleation, or the components in the drop may first react with other components present, forming new compounds which are then nucleated into particles. For example, metallic silver can be oxidized and reduced once more during the process, whereas metallic gold is nucleated into nanoparticlas in the flame.

The evaporation can be preferably produced either by the intrinsic heat of the flame, or for example by heat produced by a gas used as an atomizing gas and bringing heat to the reaction, or by means of an exothermically reacting solvent.

By controlling the functional parameters of the method, such as flame temperature, gas flow rates, and the composition, proportions and absolute quantities of the components supplied to the flame, it is possible to control not only the composition of the formed particles but also their concentration and size distribution.

The control of the size distribution of the formed particles is significant, since, as discussed in connection with the description of prior art, the particle size is a significant factor in successful colloidal dyeing. One of the most essential advantages of the method according to the invention as compared with prior art colloidal dyeing is thus that the size distribution of the formed particles can be controlled in a simpler way. Contrary to the prior art solution based on thermal treatment, the size distribution of the forming particles is not only easier to control but also easier to be theoretically modelled in the method of the invention.

The size distribution is preferably controlled in such a way that the size distribution of the forming particles is limited to be smaller than a certain particle size, or at least so that, when considered as an entity, the absorption properties of the optical wavelengths of the particles dominate over the scattering properties of the optical wavelengths of the particles. A maximum for the particle size distribution produced for colloidal dyeing is typically less than 50 nm, preferably 1 to 20 nm. It is particularly important to avoid the development of too large particles, because the scattering properties are dominant in large particles, which prevents the outcome of the desired colour effect.

Tests in practice by the inventors have surprisingly shown that an increase in the particle content did not always result in a better or more effective colouring effect, even if the particle size distribution of the formed particles was advantageous. Surprisingly, in some situations, an increase in the particle content caused serious discolourations in the dyeing. To avoid this, the control is preferably performed by limiting the content of the forming particles to be smaller than a certain content value depending on the respective material to be dyed, the colouring component used and the parameters of the dyeing process.

In the last step 15 of the method, the formed particles are brought into contact with the material to be dyed. The particles accumulate by thermophoresis and diffusion in the material to be dyed. Since the formed particles are small, also their diffusion in the material is high, wherein they penetrate into the material, dyeing it also deeper than the surface.

If desired, it is also possible to spray the material to be dyed in connection with the dyeing. In this case, it is possible to produce for example a new, coloured layer of glass on the surface of a preformed glass object. By spraying different colours and uncoloured material alternately in a desired order, it is possible to realise e.g. various colouring coats in a way which is considerably simpler than prior art.

Figure 2 illustrates an apparatus 20 for producing colloidal dyeing of a material according to the invention. The illustrated example is a flame spraying apparatus based on a fuel gas, but it will be obvious to anyone skilled in the art that a corresponding apparatus can also be implemented with a device based on e.g. a plasma flame.

The apparatus 20 comprises a nozzle part 21 which produces a flame 29 for spraying a colouring component 27. The nozzle preferably consists of tubes 22a, 22b, 22c, 22d placed within each other, through which the components used in spraying can be easily introduced to the flame 29.

To produce the flame 29, the nozzle part 21 is supplied with a fuel gas, for example hydrogen, which in Fig. 2 is supplied from a container 23b to a tube 22b used as feeding duct. In a corresponding manner, also the oxygen required for producing the flame can be supplied from a container 23c to a feeding pipe 22c. The feeding pipe 22c can be connected to the feeding pipe 22b to produce a premixed flame. The flame 29 is produced by the fuel gas and the oxygen flowing through the nozzle S. To control the reactions in the flame or in its vicinity, the process can also be supplied with a protective gas through the feeding duct 22a from the container 23a.

For simplicity, Fig. 2 only shows a situation in which the component essential for colloidal dyeing is readily mixed or dissolved in a liquid to be atomized in a container 23d. Small modifications required in the apparatus to implement the other advantageous alternatives presented in the method section of the invention, such as the arrangement of several liquid inlets by increasing the number of tubes within each other or by coupling several containers to the same inlet or by bubbling the component according to the fuel gases, will be obvious for anyone skilled in the art in the light of the above-presented method.

In the device of Fig. 2, the liquid to be atomized is supplied from a chamber 23d to a feeding duct 22d. The liquid is guided through the feeding duct to a nozzle S for atomizing the liquid, designed in a way known as such to achieve the desired flow properties. The liquid flowing through the nozzle S is atomized to droplets 28, preferably by a gas flowing from the feeding duct 22b. By the effect of thermal energy released from the flame 29, the droplets 28 either react or evaporate to form particles 27 which are advantageously introduced to the material to be dyed.

The apparatus 20 also comprises a control computer 26 or the like, to control the operation parameters of the apparatus in such a way that it is possible to control the properties of the particles 27 formed upon evaporation of the droplets 29, such as the concentration and the particle size distribution.

The above-presented figures and the descriptions related thereto are only intended to illustrate the idea of the invention. The details of the invention can vary within the scope of the claims.

## Claims

1. A method for performing colloidal dyeing of a material, **characterized in that** the method comprises
- forming a flame,
- supplying a liquid comprising at least a first component either directly in liquid state or mixed or dissolved in at least one second liquid component to the flame or to its direct vicinity,
- atomizing said liquid, which comprises the first component in liquid state or mixed or dissolved in at least one second liquid component, into droplets in such a way that the droplets also contain at least said first component or a third component formed in a reaction in which said first component has been a reactant,
- evaporating the droplets, wherein at least said first component or said third component contained in the droplets form particles,
- controlling the particle size distribution and eventually the concentration of the formed particles by controlling one or several functional parameters which comprise flame temperature, gas flow rates, and the composition, proportions, and absolute quantities of the components supplied to the flame, and
- introducing said formed particles into the material to be dyed or applying them on the surface of the material to be dyed, wherein said particles remain in the material to be dyed or on the surface of the material to be dyed, or they penetrate into the material to be dyed, colouring it in a colloidal manner.

2. The method according to claim 1, **characterized in that** the maximum for the particle size distribution of the formed particles is less than 50 nm, preferably within the range from 1 to 20 nm.

3. The method according to any of the preceding claims, **characterized in that** the dyeing process is controlled by limiting the formation of particles larger than a specific particle size.

4. The method according to any of the preceding claims, **characterized in that** said forming particles are in metallic form.

5. The method according to any of the preceding claims, **characterized in that** said first component is gold chloride (HAuCl₄).

6. The method according to claim 10, **characterized in that** an alkali metal compound, preferably LiNO₃, is added into the process.

7. The method according to any of the preceding claims, **characterized in that** the material to be dyed is glass.

8. The method according to any of the preceding claims, **characterized in that** also components producing the material to be dyed are simultaneously introduced to the flame.

9. The method according to any of the preceding claims, **characterized in that** also another component which produces dyeing directly or indirectly is simultaneously introduced to the flame.

10. An apparatus for producing colloidal dyeing of a material, **characterized in that** the apparatus comprises
- means for producing a flame,
- means for supplying at least one component to the flame and for supplying at least one liquid component to the flame,
- means for atomizing said at least one liquid component in such a way that the formed droplets contain at least said first component or a third component formed in a reaction in which said first component has been a reactant, and
- means for controlling the particle size distribution and eventually the concentrations of the particles formed upon evaporation of said droplets by means of controlling the operating parameters of the apparatus.

11. The apparatus according to claim 11, **characterized in that** said means intended for supplying the first component and said means intended for supplying a liquid are the same means.

12. The device according to claim 11, **characterized in that** the apparatus comprises means for supplying the material to be dyed simultaneously with the dyeing material.

## Patentansprüche

1. Verfahren zum Durchführen einer kolloidalen Färbung eines Materials, **dadurch gekennzeichnet, dass** das Verfahren umfasst
- Bilden einer Flamme,
- Zuführen einer Flüssigkeit, umfassend mindestens eine erste Komponente entweder direkt im flüssigen Zustand oder gemischt oder gelöst in zumindest einer zweiten Flüssigkeitshomponente, zu der Flamme oder zu deren unmittelbarer Umgebung,
- Zerstäuben der Flüssigkeit, welche die erste Komponente umfasst, im flüssigen Zustand oder gemischt oder gelöst in zumindest einer zweiten Flüssigkeitskomponente, in Tröpfchen, derart, dass die Tröpfchen ebenfalls zumindest die erste Komponente oder eine dritte Komponente umfassen, welche in einer Reaktion gebildet wurde, in welcher die erste Komponente einen Reaktanten darstellte,
- Verdampfen der Tröpfchen, wobei zumindest die erste Komponente oder die dritte Komponente, die in den Tröpfchen enthalten sind, Partikel bilden,
- Steuern/Regeln der Partikelgrößenverteilung und gegebenenfalls der Konzentration der gebildeten Partikel, durch Steuern/Regeln eines oder mehrerer funktioneller Parameter, welche die Flammentemperatur, die Gasdurchsatzraten sowie die Zusammensetzung, die Verhältnisse und die absoluten Mengen der der Flamme zugeführten Komponenten umfassen, und
- Einbringen der gebildeten Partikel in das zu färbende Material oder Auftragen derselben auf die Oberfläche des zu färbenden Materials, wobei die Partikel in dem zu färbenden Material oder auf der Oberfläche des zu färbenden Materials verbleiben, oder wobei die Partikel in das zu färbende Material eindringen, und dabei das Material in kolloidaler Weise färben.

2. Verfahren nach Anspruch 1, **dadurch gekennzeichnet, dass** das Maximum der Partikelgrößenverteilung der gebildeten Partikel weniger als 50 nm beträgt, und vorzugsweise im Bereich von 1 bis 20 nm liegt.

3. Verfahren nach einem der vorangehenden Ansprüche, **dadurch gekennzeichnet, dass** der Färbungsprozess durch Beschränkung der Bildung von Partikeln, die größer als eine bestimmte Partikelgröße sind, gesteuert/geregelt wird.

4. Verfahren nach einem der vorangehenden Ansprüche, **dadurch gekennzeichnet, dass** die gebildeten Partikel in metallischer Form vorliegen.

5. Verfahren nach einem der vorangehenden Ansprüche, **dadurch gekennzeichnet, dass** es sich bei der ersten Komponente um Goldchlorid (HAuCl₄) handelt.

6. Verfahren nach Anspruch 10, **dadurch gekennzeichnet, dass** dem Prozess eine Alkalimetallmischung, vorzugsweise LiNO₃, zugefügt wird.

7. Verfahren nach einem der vorangehenden Ansprüche, **dadurch gekennzeichnet, dass** es sich bei dem zu färbenden Material um Glas handelt.

8. Verfahren nach einem der vorangehenden Ansprüche, **dadurch gekennzeichnet, dass** auch Komponenten, die das zu färbende Material erzeugen, gleichzeitig in die Flamme eingebracht werden.

9. Verfahren nach einem der vorangehenden Ansprüche, **dadurch gekennzeichnet, dass** weiterhin eine andere Komponente, welche direkt oder indirekt die Färbung erzeugt, gleichzeitig in die Flamme eingebracht wird.

10. Vorrichtung zur Erzeugung einer kolloidalen Färbung eines Materials, **dadurch gekennzeichnet, dass** die Vorrichtung umfasst
- Mittel zum Erzeugen einer Flamme,
- Mittel zum Zuführen wenigstens einer Komponente zu der Flamme und zum Zuführen mindestens einer Flüssigkeitskomponente zu der Flamme,
- Mittel zum Zerstäuben der mindestens einen Flüssigkeitskomponente, derart, dass die gebildeten Tröpfchen mindestens die erste Komponente oder eine dritte Komponente umfassen, die in einer Reaktion, in der die erste Komponente einen Reaktanten darstellte, gebildet wurde, und
- Mittel zum Steuern/Regeln der Partikelgrößenverteilung und gegebenenfalls der Konzentrationen der Partikel, die beim Verdampfen der Tröpfchen gebildet werden, mittels Steuern/Regeln der Betriebsparameter der Vorrichtung.

11. Vorrichtung nach Anspruch 11, **dadurch gekennzeichnet, dass** die für die Zuführung der ersten Komponente vorgesehenen Mittel und die für die Zuführung einer Flüssigkeit vorgesehenen Mittel dieselben Mittel sind.

12. Vorrichtung nach Anspruch 11, **dadurch gekennzeichnet, dass** die Vorrichtung Mittel zur Zuführung des zu färbenden Materials gleichzeitig mit dem Färbungsmaterial umfasst.

## Revendications

1. Procédé pour effectuer une teinture colloïdale d'un matériau, **caractérisé en ce que** le procédé comprend les étapes consistant à :
- former une flamme,
- fournir un liquide comprenant au moins un premier composant soit directement à l'état liquide soit mélangé ou dissous dans au moins un deuxième composant liquide à la flamme ou à son voisinage direct,
- atomiser ledit liquide, qui comprend le premier composant à l'état liquide ou mélangé ou dissous dans au moins un deuxième composant liquide, en des gouttelettes d'une manière telle que les gouttelettes contiennent également au moins ledit premier composant ou un troisième composant formé dans une réaction dans laquelle ledit premier composant a été un réactif,
- évaporer les gouttelettes, dans lesquelles au moins ledit premier composant ou ledit troisième composant contenu dans les gouttelettes forme des particules,
- réguler la distribution de taille de particule et finalement la concentration des particules formées en régulant un ou plusieurs paramètres fonctionnels qui comprennent la température de flamme, les débits de gaz et la composition, les proportions, et les quantités absolues des composants fournis à la flamme, et
- introduire lesdites particules formées dans le matériau à teinter ou les appliquer sur la surface du matériau à teinter, où lesdites particules restent dans le matériau à teinter ou sur la surface du matériau à teinter, ou elles pénètrent dans le matériau à teinter, le colorant de manière colloïdale.

2. Procédé selon la revendication 1, **caractérisé en ce que** le maximum de la distribution de taille de particule des particules formées est inférieur à 50 nm, de préférence dans la gamme de 1 à 20 nm.

3. Procédé selon l'une quelconque des revendications précédentes, **caractérisé en ce que** le procédé de teinture est régulé en limitant la formation des particules plus grandes qu'une taille de particule spécifique.

4. Procédé selon l'une quelconque des revendications précédentes, **caractérisé en ce que** lesdites particules de formation sont sous une forme métallique.

5. Procédé selon l'une quelconque des revendications précédentes, **caractérisé en ce que** ledit premier composant est du chlorure d'or (HAuCl₄).

6. Procédé selon la revendication 10, **caractérisé en ce qu'**un composé de métal alcalin, de préférence LiNO₃, est ajouté dans le procédé.

7. Procédé selon l'une quelconque des revendications précédentes, **caractérisé en ce que** le matériau à teinter est du verre.

8. Procédé selon l'une quelconque des revendications précédentes, **caractérisé en outre en ce que** les composants produisant le matériau à teinter sont simultanément introduits dans la flamme.

9. Procédé selon l'une quelconque des revendications précédentes, **caractérisé en outre en ce que** un autre composant qui produit une teinture directement ou indirectement est simultanément introduit dans la flamme.

10. Appareil pour produire une teinture colloïdale d'un matériau, **caractérisé en ce que** l'appareil comprend :
- un moyen pour produire une flamme,
- un moyen pour fournir au moins un composant à la flamme et pour fournir au moins un composant liquide à la flamme,
- un moyen pour atomiser ledit au moins un composant liquide d'une manière telle que les gouttelettes formées contiennent au moins ledit premier composant ou un troisième composant formé dans une réaction dans laquelle ledit premier composant a été un réactif, et
- un moyen pour réguler la distribution de taille de particule et finalement les concentrations des particules formées lors de l'évaporation desdites gouttelettes au moyen de la régulation des paramètres de fonctionnement de l'appareil.

11. Appareil selon la revendication 10, **caractérisé en ce que** ledit moyen destiné à fournir le premier composant et ledit moyen destiné à fournir un liquide sont le même moyen.

12. Dispositif selon la revendication 11, **caractérisé en ce que** l'appareil comprend un moyen pour fournir le matériau à teinter simultanément avec le matériau de teinture.
